# EUROPÄISCHE PATENTSCHRIFT

(11) **EP 3 250 801 B1**
(45) Veröffentlichungstag und Bekanntmachung des Hinweises auf die Patenterteilung: **27.03.2019**
(21) Anmeldenummer: 15794494.3
(22) Anmeldetag: 02.11.2015
(51) Int. Cl.: F02D 9/10, F02D 9/04, F02B 37/18, F16K 1/22

(54) **BEFESTIGUNGSANORDNUNG ZUM BEFESTIGEN EINES STRÖMUNGSGEHÄUSES AN EINEM STELLERGEHÄUSE**
FASTENING ARRANGEMENT FOR FASTENING A FLOW HOUSING TO AN ACTUATOR HOUSING
DISPOSITIF DE FIXATION D'UN BOÎTIER D'ÉCOULEMENT À UN BOÎTIER D'ACTIONNEUR

(30) Priorität: 30.01.2015 DE 102015101392
(43) Veröffentlichungstag der Anmeldung: 06.12.2017
(73) Patentinhaber: Pierburg GmbH, 41460 Neuss (DE)
(72) Erfinder: NEISE, Ralf, 13086 Berlin (DE); GLÄSSER, Michael, 12355 Berlin (DE)
(74) Vertreter: Patentanwälte ter Smitten Eberlein-Van Hoof Rütten Partnerschaftsgesellschaft mbB
(86) Internationale Anmeldenummer: PCT/EP2015/075420
(87) Internationale Veröffentlichungsnummer: WO 2016/119927

(56) Entgegenhaltungen:
- WO-A1-2012/038351
- DE-A1- 3 009 453
- DE-A1-102004 040 817
- JP-A- 2008 196 437
- US-A1- 2005 092 308

## Beschreibung

Die Erfindung betrifft eine Befestigungsanordnung zum Befestigen eines Strömungsgehäuses an einem Stellergehäuse, wobei in dem Strömungsgehäuse ein Strömungskanal mit einem darin angeordneten Regelkörper angeordnet ist und an dem Strömungsgehäuse ein erstes Befestigungselement ausgebildet ist, und in dem Stellergehäuse ein Steller mit einem Stellglied und einer Stellmechanik zum Betätigen des Regelkörpers angeordnet ist und an dem Stellergehäuse ein zweites Befestigungselement ausgebildet ist, und im befestigten Zustand des Strömungsgehäuses an dem Stellergehäuse ausschließlich das erste Befestigungselement an dem zweiten Befestigungselement anliegt.

Die Befestigungsanordnung betrifft insbesondere Strömungsmengenregeleinrichtungen für Verbrennungsmotoren von Kraftfahrzeugen, wie beispielsweise Abgasklappen, Abgasrückführventile, Bypassventile (auch Wastegate), Sekundärluftventile oder Drosselklappenventile. Solche Strömungsmengenregeleinrichtungen umfassen zumeist einen strömungsseitigen Regelteil, der unter anderem das Strömungsgehäuse umfasst, und einen betätigungsseitigen Stellerteil, der unter anderem das separat ausgebildete Stellergehäuse umfasst.

In dem Strömungsgehäuse ist ein Strömungskanal mit einem darin angeordneten Regelkörper zum Öffnen oder Schließen des Strömungskanals angeordnet. Es sollte deutlich sein, dass der 'Regelkörper' hinsichtlich seiner Ausgestaltung nicht auf eine bestimmte Form begrenzt ist, sondern als eine jegliche Bauart eines Körpers zur Durchflussmengenregelung in einem Strömungskanal ausgebildet sein kann. Beispielsweise ist der Regelkörper eine drehbar gelagerte Abgasklappe. Das Strömungsgehäuse weist an einer Außenseite zumindest ein erstes Befestigungselement zum Befestigen des Strömungsgehäuses an dem Stellergehäuse auf. Selbstverständlich ist die Befestigung auch umgekehrt möglich, nämlich als Befestigung des Stellergehäuses an dem Strömungsgehäuse. Das erste Befestigungselement kann als eine Erhöhung oder Vertiefung, als ein Kragen, Tragarm, Flansch oder Steg ausgebildet sein.

In dem Stellergehäuse ist ein Steller bzw. Aktuator mit zumindest einem Stellglied und einer Stellmechanik zum Betätigen des Regelkörpers angeordnet. Das Stellglied kann beispielsweise als eine Abtriebswelle ausgebildet sein und über eine Kupplung in zwei Stellgliedabschnitte trennbar sein. Selbstverständlich kann das Stellergehäuse auch eine elektromotorische Antriebseinheit umfassen. An einer Außenseite weist das Stellergehäuse zumindest ein mit dem ersten Befestigungselement korrespondierendes zweites Befestigungselement zum Fixieren des Stellergehäuses an dem Strömungsgehäuse auf. Das zweite Befestigungselement kann ebenfalls als Erhöhung, Vertiefung, Kragen, Tragarm, Flansch oder Steg ausgebildet sein.

Das erste Befestigungselement kann insbesondere einen ersten Anlagebereich und das zweite Befestigungselement einen zweiten Anlagebereich aufweisen, wobei die beiden Anlagebereiche zueinander korrespondierend ausgebildet sind, und im befestigten Zustand des Strömungsgehäuses an dem Stellergehäuse das erste Befestigungselement insbesondere mit dem ersten Anlagebereich an dem zweiten Anlagebereich des zweiten Befestigungselements anliegt. Die Fixierung des Strömungsgehäuses an dem Stellergehäuse erfolgt in bekannter Weise mittels zumindest einer Schraube, die das erste Befestigungselement an dem zweiten Befestigungselement festlegt. Es sollte deutlich sein, dass unter dem Begriff ,im befestigten Zustand' im Folgenden immer der montierte bzw. befestigte Zustand des Strömungsgehäuses an dem Stellergehäuse zu verstehen ist.

Derartige Befestigungsanordnungen sind hinlänglich bekannt und dienen insbesondere einer exakten Ausrichtung des Strömungsgehäuses gegenüber dem Stellergehäuse. Bei solchen Befestigungsanordnungen besteht jedoch häufig die Gefahr, dass im Betrieb beispielsweise aufgrund eines wärmeführenden Mediums eine Wärmeübertragung von dem Strömungsgehäuse zu dem Stellergehäuse stattfindet. Hierdurch kann es an dem Steller oder dessen Elektronik aufgrund einer zu großen Hitzeeinwirkung zu Beschädigungen oder Beeinträchtigungen in der Funktion kommen.

Aus dem Stand der Technik sind zahlreiche Möglichkeiten bekannt, dieser Gefahr zu begegnen. Eine allgemein bekannte und relativ einfache Möglichkeit ist es, den Steller in einem von dem wärmeabgebenden Strömungskanal weit entfernten Bereich, in dem niedrigere Temperaturen vorherrschen, anzuordnen. Nachteilig hierbei sind jedoch der erhöhte Platzbedarf sowie ein aufwendiger und kostenintensiver Mechanismus zur Verstellung des Regelkörpers. Ferner ist eine präzise Einstellung des Regelkörpers zumeist nur mit viel Aufwand oder gar nicht erst möglich.

Eine weitere Möglichkeit besteht darin, ein sogenanntes Isolierplättchen zwischen dem Strömungsgehäuse und dem Stellergehäuse anzuordnen. Solche Isolierplättchen haben zwar einen thermisch isolierenden Effekt, sind jedoch in der Wirkung auf einen bestimmten Temperaturgrad begrenzt. Ferner ist durch die Anordnung eines zusätzlichen Isolierplättchens die Anzahl der Bauteile sowie der Montageaufwand erhöht.

Aus der DE 10 2004 040 817 A1 ist eine Abgasklappeneinrichtung bekannt, bei der zur Verringerung einer Wärmeübertragung von einem Regelteil zu einem Stellerteil zwischen einer Klappenwelle und einer Abtriebswelle eines Stellers eine lösbare Kupplung angeordnet ist. Eine Wärmeübertragung kann somit zumindest zeitweise unterbrochen werden. Um den Steller zusätzlich vor Strahlungswärme zu schützen, ist dieser zumindest teilweise von einem Abschirmelement umgeben. In bestimmten Fällen kann es jedoch durch das Abschirmelement selbst zu einer Wärmeübertragung in Richtung des Stellers kommen.

Aus der DE 40 40 760 A1 ist ein verstellbares Abgasstromventil mit einem Strömungsgehäuse und einem Stellergehäuse bekannt, die mittels eines separat ausgebildeten Tragarms zueinander fixiert sind. Zur Reduzierung einer Wärmeübertragung von dem Strömungsgehäuse durch den Tragarm zu dem Stellergehäuse weist das Stellergehäuse eine doppelte Bodenwand auf, wobei der Tragarm an einer äußeren Bodenwand befestigt ist und zwischen der äußeren und einer inneren Bodenwand eine isolierende Luftschicht oder ein Kühlwasserkanal ausgebildet ist. Zudem kann der Tragarm an sich Kühlbohrungen aufweisen, um aufgenommene Wärme an die Umgebung abzuleiten. Nachteilig an diesen Ausführungen ist jedoch der erhöhte Herstellungsaufwand des doppelten Bodens des Stellergehäuses sowie der durch den doppelten Boden bedingte relativ große Abstand zwischen dem Regelkörper und dem Steller, so dass ein relativ großer Bauraum erforderlich ist und eine präzise Einstellung des Regelkörpers gegenüber dem Steller nur schwer möglich ist. Dadurch sind der Herstellungs- und Montageaufwand erhöht, so dass das Abgasstromventil relativ kostenintensiv ist.

Des Weiteren ist aus der JP2008-196437 eine Klappenvorrichtung mit einem Stellergehäuse bekannt, welches an einem Strömungsgehäuse befestigt ist. Vom Stellergehäuse erstrecken sich vier L-förmige Rippen zum Strömungsgehäuse, welche im montierten Zustand an diesem anliegen. Problematisch an dieser Klappenvorrichtung ist es jedoch, dass Wärme sowohl über die Klappenwelle als auch durch eine Anlagefläche zwischen einem ringförmigen Vorsprung des Stellergehäuses, der in eine korrespondierende Ausnehmung des Strömungsgehäuses greift, in den Steller gelangt.

Der Erfindung liegt daher die Aufgabe zugrunde, eine Befestigungsanordnung eines Strömungsgehäuses an einem Stellergehäuse bereitzustellen, die eine sehr präzise, raumsparende und thermisch isolierende Fixierung der beiden Komponenten zueinander und ferner eine kostengünstige Herstellung und Montage einer Strömungsmengenregeleinrichtung ermöglicht.

Die Lösung der Aufgabe erfolgt erfindungsgemäß durch eine Befestigungsanordnung mit den Merkmalen des Anspruchs 1.

Erfindungsgemäß weist zumindest eines der beiden Befestigungselemente eine zu dem jeweils anderen weisende bzw. hin ausgerichtete, profilierte Oberflächenkontur auf und das Befestigungselement weist einen planen oder gebogenen Anlagebereich auf, an dem die Oberflächenkontur ausgebildet ist, wobei das Stellglied eine Abtriebswelle ist, die über eine Kupplung in zwei Wellenabschnitte getrennt ist. Insbesondere weist das erste Befestigungselement an dem ersten Anlagebereich und/oder das zweite Befestigungselement an dem zweiten Anlagebereich eine profilierte Oberflächenkontur auf. Die profilierte Oberflächenkontur ist somit unmittelbar an der Verbindungsstelle zwischen dem Stellergehäuse und dem Strömungsgehäuse ausgebildet und bewirkt insbesondere eine Vergrößerung der Oberfläche des an dem ersten Befestigungselement bzw. dem zweiten Befestigungselement ausgebildeten Anlagebereichs. Die Oberflächenkontur kann separat oder als Teil des jeweiligen Befestigungselements ausgebildet sein, beispielsweise weist die Oberflächenkontur mehrere nach außen hin hervorstehende, beispielsweise mäanderförmig angeordnete Erhöhungen auf, an deren Spitzen bzw. freien Enden im befestigten Zustand das erste Befestigungselement an dem zweiten Befestigungselement und/oder umgekehrt anliegen kann. Dadurch ist eine beispielsweise punktuell ausgebildete Anlagefläche geschaffen, die eine relativ stabile und präzise Fixierung des Strömungsgehäuses gegenüber dem Stellergehäuse ermöglicht, wobei zwischen dem ersten Befestigungselement und dem zweiten Befestigungselement, insbesondere benachbart zu den Erhöhungen ein oder mehrere Hohl- bzw. Zwischenräume ausgebildet sein können, in denen eine thermisch isolierende Luftschicht oder ein anderes thermisch isolierendes Material angeordnet sein kann. Durch die ausgebildete Oberflächenkontur kann somit eine Wärmeabgabe von dem jeweiligen Befestigungselement an die Umgebung bewirkt und somit eine Wärmeübertragung von dem Strömungsgehäuse zu dem Stellergehäuse vollständig oder zumindest teilweise verhindert werden. Dadurch können das Strömungsgehäuse und das Stellergehäuse relativ nah zueinander angesiedelt sein und somit die Strömungsmengenregeleinrichtung besonders kompakt und platzsparend aufgebaut sein. Folglich ist eine Befestigungsanordnung geschaffen, die sehr präzise, raumsparend, thermisch isolierend und kostengünstig ist.

Das erste Befestigungselement und/oder das zweite Befestigungselement weist einen planen oder gebogenen Anlagebereich auf, an dem die Oberflächenkontur ausgebildet ist und an dem im befestigten Zustand das erste Befestigungselement an dem zweiten Befestigungselement anliegt. Das Befestigungselement kann somit einen Anlagebereich aufweisen, der mit einer beispielsweise technisch bedingten Form eines Gehäuseteils, wie zum Beispiel einem runden Strömungskanalgehäuse, korrespondiert. Dadurch ist die Befestigungsanordnung besonders platzsparend ausgebildet. Der Anlagebereich muss nicht zwingend zusammenhängend bzw. durchgehend sein, sondern kann in einzelne Abschnitte unterteilt sein.

Die Oberflächenkontur des ersten Befestigungselements und/oder die des zweiten Befestigungselements kann wellenförmig ausgebildet sein. Je nach Ausgestaltung und Ausrichtung der wellenförmigen Erhöhungen, kann das erste Befestigungselement im befestigten Zustand punktweise oder linienweise an dem zweiten Befestigungselement anliegen, wobei zwischen dem ersten Befestigungselement und dem zweiten Befestigungselement ein beispielsweise von Luft durchströmbarer Zwischenraum ausgebildet ist. Dadurch sind eine Vergrößerung der Oberfläche und eine Verringerung der Kontaktflächen zwischen dem Strömungsgehäuse und dem Stellergehäuse geschaffen, so dass neben einer effektiven Wärmeabgabe an die Umgebung und einer Reduzierung der Wärmeübertragung an das Stellergehäuse, auch eine besonders kostengünstige Herstellung ermöglicht ist.

Zur Steigerung der Effektivität der Wärmeableitung können die Oberflächenkontur des ersten Befestigungselements und/oder die des zweiten Befestigungselements eine oder mehrere von dem Befestigungselement nach außen, in Richtung des gegenüberliegenden Anlagebereichs hervorstehende Rippen aufweisen. Beispielsweise kann das erste Befestigungselement eine erste Rippe und das zweite Befestigungselement eine zweite Rippe aufweisen. Im befestigten Zustand sind die Rippen zwischen dem ersten Befestigungselement und dem zweiten Befestigungselement angeordnet, wobei die Befestigungselemente an den Stirnflächen der Rippen aneinander anliegen können. Somit kann ein thermisch isolierend wirkender Zwischenraum zwischen dem ersten Befestigungselement und dem zweiten Befestigungselement geschaffen sein, ohne dass die Befestigungsanordnung in ihrer Stabilität oder Präzision beeinträchtigt wird. Der zwischen den Rippen ausgebildete Zwischenraum kann beispielsweise von Luft durchströmt werden, so dass eine Wärmeübertragung von den Rippen an die Umgebung ermöglicht ist. Dadurch kann eine in dem Anlagebereich auftretende Wärmeentwicklung unmittelbar an die Umgebungsluft abgeleitet werden, ohne dass es zu einer weiterführenden Wärmeübertragung zu dem Stellergehäuse kommt. Zur Steigerung der Wärmeübertragung an die Umgebung kann die in den Zwischenräumen befindliche Luft aktiv oder passiv in Bewegung bzw. in Strömung versetzt sein. Insbesondere kann an dem Strömungsgehäuse und/oder dem Stellergehäuse zusätzlich ein Leitblech oder ein Strömungskanal vorgesehen sein, durch das bzw. durch den strömende Luft, beispielsweise ein Fahrtwind, in Richtung der luftdurchströmbaren Rippenzwischenräume geleitet wird. Die Rippen können - je nach Position oder Ausrichtung der Strömungsmengenregeleinrichtung in einem Einbauraum und/oder je nach Ausrichtung einer vorhandenen Luftströmung im eingebauten Zustand der Strömungsmengenregeleinrichtung - über ihre Längserstreckung geradlinig oder kurvenförmig ausgebildet sein. Dadurch kann eine zur Wärmeaufnahme durch die Luft geeignete Durchströmung des Zwischenraums zwischen den einzelnen Rippen ermöglicht werden. Zur weiteren Vergrößerung der Zwischenräume, können bei der Ausbildung einer Kombination aus wellenförmigen und rippenartigen Oberflächenkonturen die Rippen an den nach außen hervorstehenden wellenförmigen Erhöhungen der Oberfläche angeordnet sein.

In einer Ausgestaltung der Erfindung, bei der die Oberflächenkonturen jeweils an beiden Anlagebereichen der Befestigungselemente angeordnet sind und im befestigten Zustand zumindest teilweise mit den Stirnseiten aneinander anliegen, können die Oberflächenkonturen grundsätzlich parallel zueinander verlaufen, so dass die Stirnflächen der Oberflächenkonturen linienweise aneinander liegen. Vorzugsweise sind die sich gegenüberstehenden Oberflächenkonturen schräg oder quer zueinander ausgerichtet, so dass die Stirnflächen lediglich punktuell aneinander liegen. Insbesondere ist in einer vorteilhaften Ausgestaltung der Erfindung die als Rippen ausgebildete Oberflächenkontur des ersten Befestigungselements quer zu der als Rippen ausgebildeten Oberflächenkontur des zweiten Befestigungselements ausgerichtet. Dadurch ist eine besonders gute Wärmeabgabe in zwei Ebenen bzw. an zwei in unterschiedliche Richtungen ausgebildete Konvektionsluftströme ermöglicht. Eine Wärmeübertragung an das Stellergehäuse kann somit deutlich verringert wird.

Die Oberflächenkontur kann eine von dem jeweiligen Befestigungselement nach außen hin gerichtete definierte Höhe aufweisen. Diese Höhe entspricht vorteilhafterweise der Hälfte der jeweiligen Längserstreckung der Oberflächenkontur. Dieses Verhältnis hat sich insbesondere in Bezug auf die als Rippen ausgebildete Oberflächenkontur für eine Wärmeabgabe an die Umgebung als besonders effektiv erwiesen. Die benachbart zueinander angeordneten wellenförmigen Erhöhungen bzw. Rippen der Oberflächenkontur weisen dabei grundsätzlich jeweils die gleiche Höhe auf, so dass jede Erhöhung oder Rippe mit ihrer jeweiligen Spitze bzw. Stirnfläche an dem gegenüberliegenden Anlagebereich zur Anlage kommen kann. Die Stirnfläche bildet somit eine linienförmige oder punktuelle Anlagefläche, so dass eine besonders effektive Fixierung des Strömungsgehäuses gegenüber dem Stellergehäuse ermöglicht ist.

In einer alternativen Ausgestaltung der Erfindung weist die Oberflächenkontur, insbesondere eine Oberflächenkontur mit wellenförmigen Erhöhungen oder Rippen, zumindest zwei unterschiedliche Höhen auf. Insbesondere kann die Oberflächenkontur in einem Randbereich des Anlagebereichs eine größere Höhe H als die Oberflächenkontur in einem Zentralbereich des Anlagebereichs aufweisen. Dadurch kann das erste Befestigungselement mit dem zweiten Befestigungselement an lediglich einem äußeren Randbereich des Anlagebereichs in Kontakt stehen. Die Oberflächenkontur in dem Zentralbereich kann hierbei zur reinen Wärmeabgabe an die Umgebung dienen und insbesondere als ein zwischen dem ersten Befestigungselement und dem zweiten Befestigungselement angeordneter Kühlkörper ausgebildet sein. Die Höhe H entspricht im Wesentlichen dem Abstand zwischen einer Spitze bzw. einem freien Ende der Oberflächenkontur und einer Grundebene, von der aus die Oberflächenkontur sich nach außen hin erstreckt.

Vorzugsweise ist die Oberflächenkontur des ersten Anlagebereichs mit dem ersten Befestigungselement und/oder die Oberflächenkontur des zweiten Anlagebereichs mit dem zweiten Befestigungselement einstückig ausgebildet. Dies ist zumeist der Fall, wenn die Oberflächenkontur mit dem Befestigungselement beispielsweise in einem Gussverfahren zusammen hergestellt ist. Die Oberflächenkontur ist somit jeweils als ein Teil des Befestigungselements ausgebildet. Dadurch ist eine relativ einfache und präzise Herstellung der Anlagebereiche ermöglicht. Alternativ ist die Oberflächenkontur an dem Anlagebereich separat ausgebildet, beispielsweise als eine aufgebrachte Beschichtung. Ferner kann die Oberflächenkontur an einer separat ausgebildeten und zwischen dem ersten Befestigungselement und dem zweiten Befestigungselement angeordneten Platte oder Scheibe ausgebildet sein.

Die Oberflächenkontur ist bevorzugt aus einem Material mit geringer Wärmeleitfähigkeit hergestellt, so dass eine Wärmeübertragung durch die Oberflächenkontur zumindest teilweise verhindert wird. Die Oberflächenkontur kann aus mehreren Materialien hergestellt sein, beispielsweise ist die Oberflächenkontur in dem Randbereich des Anlagebereichs aus einem Material mit geringer Wärmeleitfähigkeit und die Oberflächenkontur in dem Zentralbereich des Anlagebereichs aus einem Material mit guter Wärmeleitfähigkeit ausgebildet. Dadurch kann insbesondere bei Ausgestaltung von unterschiedlichen Höhen der Oberflächenkontur in dem Zentralbereich die Wärme an die Umgebung abgegeben und im Randbereich eine Wärmeübertragung an das Stellergehäuse verhindert werden. Somit ist eine besonders platzsparende und thermisch isolierende Befestigungsanordnung geschaffen.

Zur Befestigung des Strömungsgehäuses an dem Stellergehäuse, kann die Oberflächenkontur von zumindest einer Bohrung durchbrochen sein, durch die sich im befestigten Zustand ein Befestigungsmittel, wie ein Niet, Stift oder eine Schraube erstreckt. Insbesondere bei Ausbildung eines Flansches kann die Bohrung für eine Schraube mit einer Mutter vorgesehen sein. Dadurch kann das Strömungsgehäuse gegenüber dem Stellergehäuse in relativ einfacher Weise, sicher und präzise festgelegt werden.

Zur Steigerung der Effektivität der Wärmeableitung an die Umgebung kann das erste Befestigungselement und/oder das zweite Befestigungselement beispielsweise an einer dem Anlagebereich gegenüberliegenden Seite zumindest eine zusätzlich angeordnete Kühlrippe aufweisen. Dadurch kann die Wärme von dem Anlagebereich abgeleitet werden und in einem anderen als dem Anlagebereich angeordneten Bereich zusätzlich an die Umgebung abgegeben werden.

Nachfolgend wird die Erfindung anhand mehrerer bevorzugter Ausführungsformen am Beispiel einer Abgasmengenregeleinrichtung unter Bezugnahme auf die anliegenden Zeichnungen näher erläutert.
Figur 1 zeigt schematisch eine Abgasmengenregeleinrichtung mit einer erfindungsgemäßen Befestigungsanordnung eines Strömungsgehäuses an einem Stellergehäuse in geschnittener Darstellung,
Figuren 2a und 2b zeigen jeweils schematisch eine Ausgestaltung einer erfindungsgemäßen Befestigungsanordnung in geschnittener Darstellung,
Figuren 3a, 3b, 3c, 3d und 3e zeigen jeweils schematisch eine Ausgestaltung einer Oberflächenkontur an einer erfindungsgemäßen Befestigungsanordnung in geschnittener Darstellung, und
Figur 4 zeigt schematisch eine weitere Ausgestaltung einer Oberflächenkontur an einer erfindungsgemäßen Befestigungsanordnung in geschnittener Darstellung.

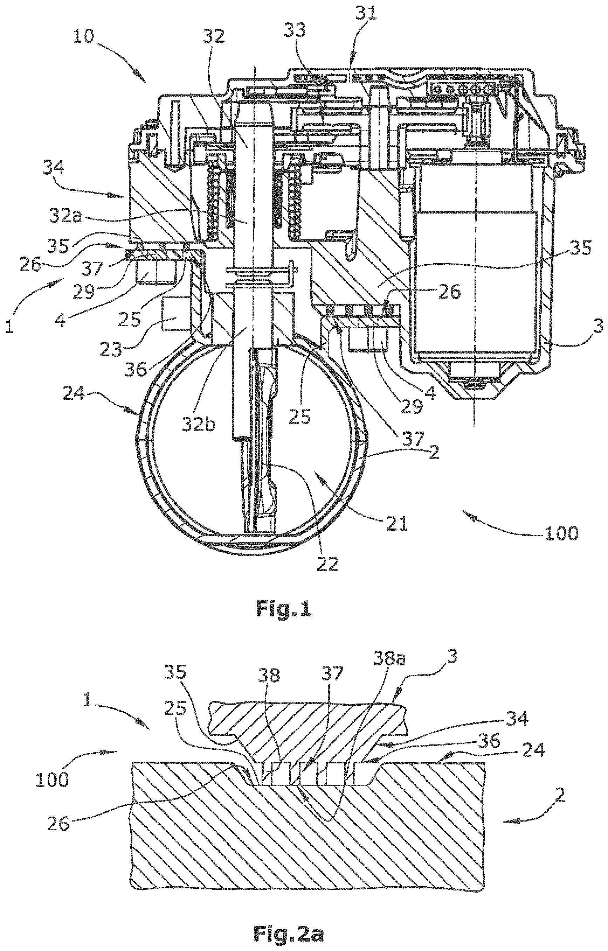

In der Figur 1 ist eine Strömungsmengenregeleinrichtung 10, die im vorliegenden Fall als eine Abgasmengenregeleinrichtung fungiert, mit einer Befestigungsanordnung 1 zum Befestigen eines Strömungsgehäuses 2 an einem Stellergehäuse 3 gezeigt. Das Strömungsgehäuse 2 umgibt einen vorliegend von Abgas durchströmten Strömungskanal 21 mit einem darin angeordneten und vorliegend als Abgasklappe ausgebildeten Regelkörper 22 zum Öffnen oder Schließen des Strömungskanals 21. Zum Betätigen des Regelkörpers 22 ist ein von dem Stellergehäuse 3 zumindest teilweise umgebender Steller 31 vorgesehen, wobei der Steller 31 zumindest ein Stellglied 32 und eine Stellmechanik 33 umfasst. Das Stellglied 32 ist vorliegend eine Abtriebswelle, die über eine schematisch dargestellte Kupplung in zwei Wellenabschnitte 32a, 32b teilbar bzw. trennbar ist, so dass im Betrieb eine Wärmeübertragung durch die Abtriebswelle 32 vermieden werden kann.

Das Strömungsgehäuse 2 weist zur Ausrichtung und Fixierung des Strömungsgehäuses 2 gegenüber dem Stellergehäuse 3 an einer Außenseite 24 vorliegend insgesamt zwei erste Befestigungselemente 25 auf. Jedes erste Befestigungselement 25 ist als ein von dem Strömungsgehäuse 2 nach außen hin hervorstehender Steg ausgebildet. An einer flächig ausgebildeten Seite des ersten Befestigungselements 25, insbesondere in der Figur 1 an einer Oberseite, ist ein erster Anlagebereich 26 ausgebildet, mit dem das Strömungsgehäuse 2 im befestigten Zustand 100 an dem Stellergehäuse 3 anliegt. An einer dem Steller 31 abgewandten Seite des ersten Befestigungselements 25 ist zusätzlich eine von dem ersten Befestigungselement 25 nach außen hin hervorstehende Kühlrippe 23 angeordnet, über die Wärme von dem ersten Befestigungselement 25 an die Umgebungsluft abgegeben werden kann.

Das Stellergehäuse 3 weist an einer Außenseite 34, insbesondere an einer Unterseite, zwei jeweils mit den ersten Befestigungselementen 25 korrespondierende zweite Befestigungselemente 35 auf. Das zweite Befestigungselement 35 ist jeweils als ein Absatz an dem Stellergehäuse 3 ausgebildet. Das zweite Befestigungselement 35 weist einen zweiten Anlagebereich 36 mit einer zweiten Oberflächenkontur 37 auf, an der das Stellergehäuse 3 im befestigten Zustand 100 an dem Strömungsgehäuse 2 anliegt.

Die beiden Anlagebereiche 26, 36 der beiden Befestigungselemente 25, 35 sind jeweils zueinander korrespondierend ausgebildet, so dass in dem in Figur 1 gezeigten befestigten Zustand 100 das erste Befestigungselement 25 mit dem ersten Anlagebereich 26 an der Oberflächenkontur 37 des zweiten Anlagebereichs 36 des zweiten Befestigungselements 35 anliegt. Die Anlagebereiche 26, 36 können somit eine Anlageebene bilden. Das Fixieren des Strömungsgehäuses 2 gegenüber dem Stellergehäuse 3 erfolgt vorliegend jeweils mittels einer Schraube 4, die sich durch eine in dem ersten Anlagebereich 26 mittig angeordnete Bohrung 29 erstreckt und mit einem in dem zweiten Befestigungselement 35 ausgebildeten, in Figur 1 nicht dargestellten Gewinde in Eingriff steht.

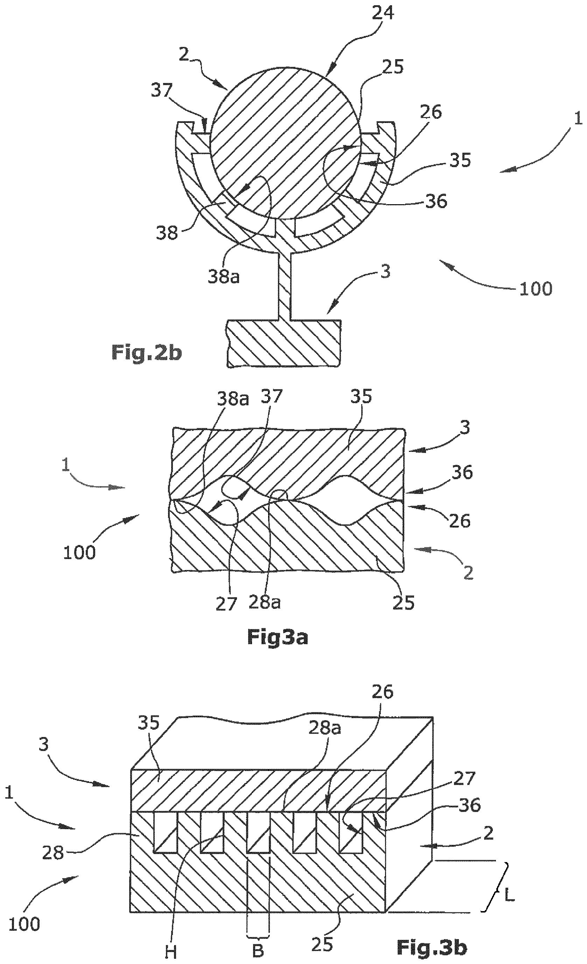

In den Figuren 2a und 2b ist jeweils eine Ausgestaltung einer Befestigungsanordnung 1 zum Befestigen eines Strömungsgehäuses 2 an einem Stellergehäuse 3 gezeigt. Die Figuren 2a und 2b zeigen dabei jeweils einen Ausschnitt einer Abgasmengenregeleinrichtung. Der Aufbau des Strömungsgehäuses 2 und des Stellergehäuses 3 können hierbei grundsätzlich dem zuvor beschriebenen Aufbau entsprechen.

In der Figur 2a ist eine Befestigungsanordnung 1 mit einem planen Anlagebereich 26, 36 gezeigt, wobei ein erstes Befestigungselement 25 als eine an einer Außenseite 24 des Strömungsgehäuses 2 angeordnete plane Vertiefung und ein zweites Befestigungselement 35 als eine an einer Außenseite 34 des Stellergehäuses 3 angeordnete plane Erhöhung ausgebildet ist. Das zweite Befestigungselement 35 weist eine zu dem ersten Befestigungselement 25 hin ausgerichtete profilierte Oberflächenkontur 37 auf. Die Oberflächenkontur 37 ist vorliegend durch mehrere parallel zueinander angeordnete, von dem zweiten Befestigungselement 35 hervorstehende Rippen 38 gebildet. Dadurch wird die Oberfläche des zweiten Befestigungselements 35 in dem zweiten Anlagebereich 36 signifikant vergrößert und eine Wärmeabgabe an die Umgebung ermöglicht. Im gezeigten befestigten Zustand 100 liegen die Rippen 38 jeweils mit den freien Enden 38a linienförmig an dem Anlagebereich 26 des ersten Befestigungselements 25 an. Somit bilden die freien Enden 38a der Rippen 38 den zweiten Anlagebereich 36 des zweiten Befestigungselements 35.

In der Figur 2b ist eine Befestigungsanordnung 1 mit einem gewölbten Anlagebereich 26, 36 gezeigt, bei der ein erstes Befestigungselement 25 als eine an einer Außenseite 24 des Strömungsgehäuses 2 angeordnete gebogene Fläche und ein zweites Befestigungselement 35 als ein zu dem ersten Befestigungselement 25 korrespondierender gebogener Tragarm ausgebildet ist. Insbesondere weist der Tragarm des zweiten Befestigungselements 35 eine zu der Wölbung des ersten Befestigungselements 25 korrespondierende Form auf. Das zweite Befestigungselement 35 weist wiederum eine zu dem ersten Befestigungselement 25 hin ausgerichtete profilierte Oberflächenkontur 37 auf, insbesondere mehrere hervorstehende Rippen 38. Die Rippen 38 liegen im befestigten Zustand 100 jeweils mit ihren freien Enden 38a linienförmig an dem Anlagebereich 26 des ersten Befestigungselements 25 an und bilden somit den zweiten Anlagebereich 36 des zweiten Befestigungselements 35. Zwischen den Rippen 38 sind wiederum Zwischenräume ausgebildet, die von Luft durchströmbar sind, so dass eine Wärmeabgabe von dem Strömungsgehäuses 2 und/oder dem Stellergehäuse 3 an die Umgebung ermöglicht ist.

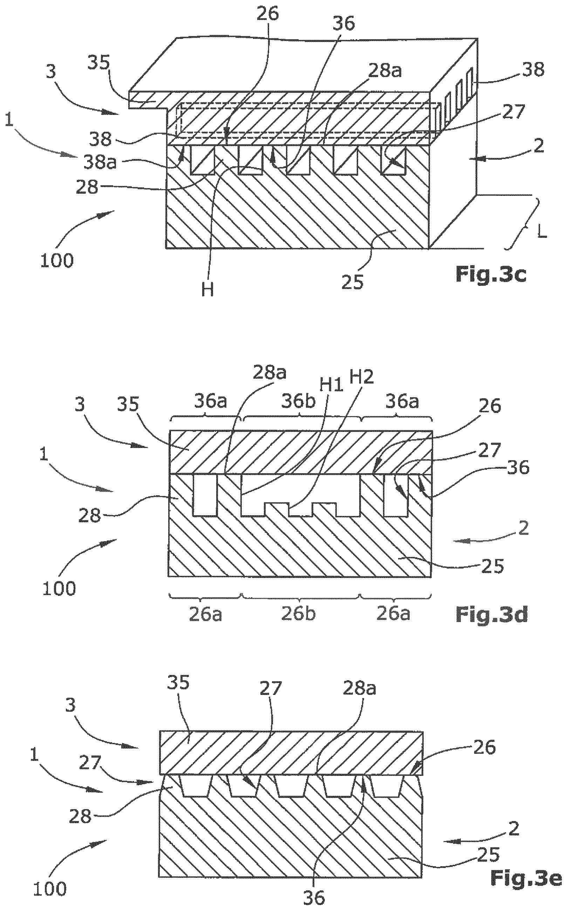

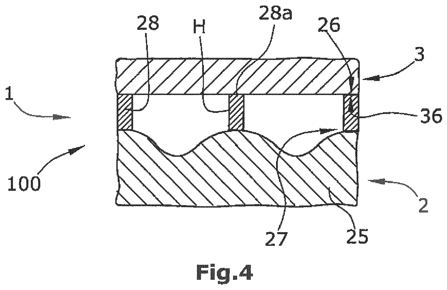

Es sollte deutlich sein, dass die Ausgestaltung und Anordnung der Befestigungsanordnung 1 und/oder der Befestigungselemente 25, 35 nicht auf die hier gezeigten Ausführungsbeispiele beschränkt sind, sondern eine jegliche Ausgestaltung und Anordnung möglich ist. Nachfolgend wird insbesondere auf die Ausgestaltung der Oberflächenkonturen 27, 37 als solche Bezug genommen, wobei der grundsätzliche Aufbau des Strömungsgehäuses 2, des Stellergehäuses 3 und der Befestigungsanordnung 1 einer der zuvor beschriebenen Ausgestaltung entsprechen kann. Die Figuren 3a, 3b, 3c, 3d, 3e und 4 zeigen dabei jeweils einen Ausschnitt einer insbesondere von Abgas durchströmten Strömungsmengenregeleinrichtung.

In der Figur 3a ist schematisch eine erste Ausgestaltung einer Oberflächenkontur 27, 37 an einer Befestigungsanordnung 1 in einer Querschnittansicht gezeigt. Die Oberflächenkonturen 27, 37 an den Anlagebereichen 26, 36 sind jeweils als wellenförmige Erhöhungen ausgebildet. Dadurch liegen die Befestigungselemente 25, 35 lediglich an den Spitzen bzw. an den maximalen Erhöhungspunkten 28a, 38a der wellenförmigen Erhöhungen linienweise aneinander. Seitlich neben den Kontaktpunkten 28a, 38a sind Zwischenräume ausgebildet, die von Luft durchströmbar sind, so dass eine Wärmeabgabe von dem Strömungsgehäuses 2 und/oder dem Stellergehäuse 3 an die Umgebung ermöglicht ist.

In der Figur 3b ist schematisch eine zweite Ausgestaltung einer Oberflächenkontur 27 an einer Befestigungsanordnung 1 in einer perspektivischen Querschnittansicht gezeigt. Die Oberflächenkontur 27 des ersten Befestigungselements 25 des Strömungsgehäuses 2 ist vorliegend als mehrere parallel zueinander angeordnete Rippen 28 ausgebildet. Die Rippen 28 stehen von dem ersten Befestigungselement 25 hervor und liegen im befestigten Zustand 100 mit ihren freien Enden 28a linienförmig an dem Anlagebereich 36 des zweiten Befestigungselements 35 an. Die Rippen 28 weisen eine Höhe H auf, die im Wesentlichen der Hälfte ihrer Längserstreckung L entspricht. Zwischen den Rippen 28 sind Hohl- bzw. Zwischenräume ausgebildet, die von Luft durchströmbar sind, so dass die Oberfläche des ersten Befestigungselements 25 in dem ersten Anlagebereich 26 signifikant vergrößert und eine Wärmeabgabe von dem Strömungsgehäuses 2 und/oder dem Stellergehäuse 3 an die Umgebung ermöglicht ist. Der Zwischenraum hat eine Breite B, die im Wesentlichen einem Vielfachen der Breite einer Rippe 28 entspricht. Dadurch ist eine besonders effektive Wärmeabgabe von den Rippen 28 an die durch die Zwischenräume strömende Umgebungsluft ermöglicht. Die Oberflächenkontur 27 des ersten Befestigungselements 25 kann spiegelsymmetrisch zu der Anlageebene auch an dem zweiten Befestigungselement 35 ausgebildet sein.

In der Figur 3c ist schematisch eine dritte Ausgestaltung einer Oberflächenkontur 27, 37 an einer Befestigungsanordnung 1 in einer perspektivischen Querschnittansicht gezeigt. Die Oberflächenkontur 27 an dem ersten Anlagebereich 26 weist wiederum Rippen 28 auf, die von dem ersten Befestigungselement 25 hervorstehen und im Wesentlichen den in der Figur 3b gezeigten Rippen 28 entsprechen. Das zweite Befestigungselement 35 weist nunmehr ebenfalls Rippen 38 auf, die an dem zweiten Anlagebereich 36 von dem zweiten Befestigungselement 35 in Richtung des ersten Befestigungselements 25 hervorstehen, wobei die Rippen 38 quer zu den Rippen 28 angeordnet sind. Dadurch liegen die Rippen 28 des ersten Befestigungselements 25 im befestigten Zustand 100 mit ihren freien Enden 28a insbesondere punktweise oder gitterförmig an den Stirnseitenflächen 38a der Rippen 38 des zweiten Befestigungselements 35 an. Die sich kreuzenden Rippen 28, 38 ermöglichen eine besonders effektive Konvektionsströmung in den Rippen-Zwischenräumen, so dass die Rippen 28, 38 als luftgekühlte Kühlrippen fungieren können und eine besonders effektive Wärmeabgabe von dem Strömungsgehäuse 2 als auch von dem Stellergehäuse 3 an die Umgebungsluft ermöglicht ist. Ferner bewirkt eine solche Anordnung eine relativ hohe Stabilität in dem Verbindungsbereich.

Alternativ ist es - wie in Bezug auf die Figur 3b bereits angesprochen - möglich, dass die Rippen 38 nicht quer sondern parallel zu den Rippen 28 angeordnet sind. Dadurch können die Rippen 38 insbesondere spiegelverkehrt zu den Rippen 28 bzw. symmetrisch zu der Anlageebene angeordnet sein, so dass die Rippen 28, 38 in diesem Fall mit ihren freien Enden 28a, 38a aneinander liegen und ein besonders großer bzw. hoher Zwischenraum zwischen den Rippen 28, 38 ausgebildet ist und eine besonders effektive Wärmeabgabe von den Rippen 28, 38 an die durch die Zwischenräume strömende Umgebungsluft ermöglicht ist.

In der Figur 3d ist schematisch eine vierte Ausgestaltung einer Oberflächenkontur 27 an einer Befestigungsanordnung 1 in einer Querschnittansicht gezeigt. Die Oberflächenkontur 27 ist wiederum als von dem ersten Befestigungselement 25 hervorstehende Rippen 28 ausgebildet, wobei die Rippen 28 unterschiedliche Höhen H aufweisen. Insbesondere weisen die Rippen 28 in einem Randbereich 26a des Anlagebereichs 26 eine größere Höhe H, insbesondere eine Höhe H1, als in einem Zentralbereich 26b auf. Dadurch kann das erste Befestigungselement 25 mit dem zweiten Befestigungselement 35 an lediglich einem äußeren Randbereich 26a des Anlagebereichs 26 in Kontakt stehen. Die Oberflächenkontur 27 in dem Zentralbereich 26b weist dagegen eine geringere Höhe H2 auf und kann zur reinen Wärmeabgabe an die Umgebung und insbesondere als ein zwischen dem ersten Befestigungselement 25 und dem zweiten Befestigungselement 35 ausgebildeter Kühlkörper dienen. Hierbei können die Rippen 28 in dem Randbereich 26a aus einem anderen Material, insbesondere einem weniger wärmeleitfähigen Material, bestehen als die Rippen 28 in dem Zentralbereich 26b, so dass Wärme im Zentralbereich 26b an die Umgebung abgeführt werden kann. Wie bereits erwähnt, kann selbstverständlich die gleiche Oberflächenkontur korrespondierend an dem Stellergehäuse 3 ausgebildet sein.

In der Figur 3e ist schematisch eine fünfte Ausgestaltung einer Oberflächenkontur 27 an einer Befestigungsanordnung 1 in einer Querschnittansicht gezeigt. Die Oberflächenkontur 27 ist als von dem ersten Befestigungselement 25 hervorstehende punktförmige Erhöhungen 28 ausgebildet, wobei die Erhöhungen 28 massiv ausgebildet sind und in Richtung ihres freien Endes 28a konisch zusammen laufen. Im befestigten Zustand 100 liegen die Erhöhungen 28 mit einer Stirnseite 28a punktweise an dem zweiten Anlagebereich 36 des zweiten Befestigungselements 35 an. Zwischen den Erhöhungen 28 sind Zwischenräume zur Luftkonvektion ausgebildet ist. Dadurch ist eine besonders stabile Fixierung des Strömungsgehäuses 2 gegenüber dem Stellergehäuse 3 ermöglicht. Selbstverständlich kann die am Beispiel des ersten Befestigungselements 25 gezeigte Ausgestaltung der Oberflächenkontur 27 spiegelsymmetrisch zur Anlageebene auch korrespondierend an dem zweiten Befestigungselement 35 angeordnet sein.

In der Figur 4 ist ein weiteres Ausführungsbeispiel der Befestigungsanordnung 1 mit einem ersten Befestigungselement 25 und einem zweiten Befestigungselement 35 in einer Querschnittsansicht gezeigt. Die Oberflächenkonturen 27, 37 an den Anlagebereichen 26, 36 sind jeweils als wellenförmige Erhöhungen ausgebildet, wobei an den Spitzen bzw. maximalen Erhöhungen der wellenförmigen Erhöhungen zusätzlich nach außen hervorstehende Rippen 28, 38 angeordnet sind. Durch diese Kombination von wellenförmigen Erhöhungen und auf den Spitzen angeordneten Kühlrippen 28, 38 sind seitlich neben den Kontaktpunkten besonders große Zwischenräume ausgebildet, die von Luft durchströmbar sind, so dass eine Wärmeabgabe von dem Strömungsgehäuses 2 und/oder dem Stellergehäuse 3 an die Umgebung besonders effektiv ist.

Somit ist eine Befestigungsanordnung geschaffen, die isolierend wirkt, platzsparend aufgebaut und kostengünstig in der Herstellung und Montage ist. Es sollte deutlich sein, dass der Hauptanspruch nicht auf die beschriebenen Ausführungsbeispiele begrenzt ist. Wie bereits erwähnt ist insbesondere eine Anpassung der Oberflächenkontur an die Lage und Ausführung des Befestigungselements variabel.

### Bezugszeichenliste

- 1: Befestigungsanordnung
- 10: Strömungsmengenregeleinrichtung

- 2: Strömungsgehäuse
- 21: Strömungskanal
- 22: Regelkörper, Abgasklappe
- 23: Kühlrippe
- 24: Außenseite
- 25: Erstes Befestigungselement
- 26: Erster Anlagebereich
- 26a: Randbereich
- 26b: Zentralbereich
- 27: Oberflächenkontur
- 28: Rippen
- 28a: Stirnfläche, Anlagefläche
- 29: Bohrung

- 3: Stellergehäuse
- 31: Steller, Aktuator
- 32: Stellglied
- 32a: erster Stellgliedabschnitt
- 32b: zweiter Stellgliedabschnitt
- 33: Stellmechanik
- 34: Außenseite
- 35: Zweites Befestigungselement
- 36: Zweiter Anlagebereich
- 36a: Randbereich
- 36b: Zentralbereich
- 37: Oberflächenkontur
- 38: Rippen
- 38a: Stirnfläche, Anlagefläche

- 4: Schraube

- 100: befestigter Zustand

- L: Rippenlänge
- B: Rippenbreite
- H: Rippenhöhe

## Patentansprüche

1. Befestigungsanordnung (1) mit einem Strömungsgehäuse (2) und einem Stellergehäuse (3),
wobei in dem Strömungsgehäuse (2) ein Strömungskanal (21) mit einem darin angeordneten Regelkörper (22) angeordnet ist und an dem Strömungsgehäuse (2) ein erstes Befestigungselement (25) ausgebildet ist,
und in dem Stellergehäuse (3) ein Steller (31) mit einem Stellglied (32) und einer Stellmechanik (33) zum Betätigen des Regelkörpers (22) angeordnet ist und an dem Stellergehäuse (3) ein zweites Befestigungselement (35) ausgebildet ist,
und im befestigten Zustand (100) des Strömungsgehäuses (2) an dem Stellergehäuse (3) ausschließlich das erste Befestigungselement (25) an dem zweiten Befestigungselement (35) anliegt, wobei zumindest eines der beiden Befestigungselemente (25, 35) eine zum anderen weisende profilierte Oberflächenkontur (27, 37) aufweist, und das Befestigungselement (25, 35) einen planen oder gebogenen Anlagebereich (26, 36) aufweist, an dem die Oberflächenkontur (27, 37) ausgebildet ist, wobei das Stellglied (32) eine Abtriebswelle ist, die über eine Kupplung in zwei Wellenabschnitte (32a, 32b) getrennt ist.

2. Befestigungsanordnung (1) nach Anspruch 1, **dadurch gekennzeichnet, dass**
die Oberflächenkontur (27, 37) wellenförmig ausgebildet ist.

3. Befestigungsanordnung (1) nach einem der voranstehenden Ansprüche, **dadurch gekennzeichnet, dass**
die Oberflächenkontur (27, 37) zumindest zwei hervorstehende Rippen (28, 38) aufweist.

4. Befestigungsanordnung (1) nach einem der voranstehenden Ansprüche, **dadurch gekennzeichnet, dass**
die Oberflächenkontur (27) des ersten Befestigungselements (25) quer zu der Oberflächenkontur (37) des zweiten Befestigungselements (35) ausgerichtet ist.

5. Befestigungsanordnung (1) nach einem der voranstehenden Ansprüche, **dadurch gekennzeichnet, dass**
die Oberflächenkontur (27, 37) eine Höhe (H) aufweist, die der Hälfte einer Längserstreckung (L) der Oberflächenkontur (27, 37) entspricht.

6. Befestigungsanordnung (1) nach einem der voranstehenden Ansprüche, **dadurch gekennzeichnet, dass**
die Oberflächenkontur (27, 37) in einem Randbereich (26a, 36a) eine größere Höhe (H) als in einem Zentralbereich (26b, 36b) aufweist.

7. Befestigungsanordnung (1) nach einem der voranstehenden Ansprüche, **dadurch gekennzeichnet, dass**
die Oberflächenkontur (27, 37) mit dem Befestigungselement (25, 35) einstückig ausgebildet ist.

8. Befestigungsanordnung (1) nach einem der voranstehenden Ansprüche, **dadurch gekennzeichnet, dass**
die Oberflächenkontur (27, 37) aus einem Material mit geringer Wärmeleitfähigkeit besteht.

9. Befestigungsanordnung (1) nach einem der voranstehenden Ansprüche, **dadurch gekennzeichnet, dass**
die Oberflächenkontur (27, 37) von zumindest einer Bohrung (29, 39) durchbrochen ist, durch die sich im befestigten Zustand (100) ein Niet, Stift oder eine Schraube (4) erstreckt.

## Claims

1. Fastening arrangement (1) having a flow housing (2) and an actuator housing (3),
wherein a flow channel (21) with a control body (22) arranged therein is arranged in the flow housing (2), and a first fastening element (25) is formed on the flow housing (2),
and an actuator (31) with an actuator element (31) and an actuation mechanism (32) for actuating the control body (22) is arranged in the actuator housing (3), and a second fastening element (35) is formed on the actuator housing (3),
and, in the state (100) of the flow housing (2) being fastened to the actuator housing (3), only the first fastening element (25) abuts on the second fastening element (35),
wherein at least one of the two fastening elements (25, 35) has a profiled surface contour (27, 37) directed to the respective other element, and the fastening element (25, 35) has a planar or curved abutment region (26, 36) at which the surface contour (27, 37) is formed, wherein the actuator element (32) is an output shaft separated in two shaft sections (32a, 32b) via a coupling.

2. Fastening arrangement (1) of claim 1, **characterized in that** the surface contour (27, 37) is wave-shaped.

3. Fastening arrangement (1) of one of the preceding claims, **characterized in that** the surface contour (27, 37) comprises at least two protruding ribs (28, 38).

4. Fastening arrangement (1) of one of the preceding claims, **characterized in that** the surface contour (27) of the first fastening element (25) is directed transversely to the surface contour (37) of the second fastening element (35).

5. Fastening arrangement (1) of one of the preceding claims, **characterized in that** the surface contour (27, 37) has a height (H) corresponding to half a length (L) of the surface contour (27, 37).

6. Fastening arrangement (1) of one of the preceding claims, **characterized in that** the surface contour (27, 37) has a greater height (H) in an edge zone (26a, 36a) than in a central zone (26b, 36b).

7. Fastening arrangement (1) of one of the preceding claims, **characterized in that** the surface contour (27, 37) is formed integrally with the fastening element (25, 35).

8. Fastening arrangement (1) of one of the preceding claims, **characterized in that** the surface contour (27, 37) is made of a material of low thermal conductivity.

9. Fastening arrangement (1) of one of the preceding claims, **characterized in that** the surface contour (27, 37) is penetrated by at least one bore (29, 39) through which a rivet, pin or a screw (4) extends in the fastened state (100).

## Revendications

1. Dispositif de fixation (1) avec boitier d'écoulement (2) et boitier d'actionneur (3),
dans lequel un canal d'écoulement (21), avec un corps de réglage (22) disposé là-dedans, est disposé dans le boitier d'écoulement (2) et un premier élément de fixation (25) est formé sur le boitier d'écoulement (2),
et un actionneur (31), avec un élément d'actionnement (32) et un mécanisme d'actionnement (33) pour actionner le corps de réglage (22), boitier est disposé dans le boitier d'actionneur (3) et un deuxième élément de fixation (35) est formé sur le boitier d'actionneur (3),
et, dans l'état (100) du boitier d'écoulement (2) fixé sur le boitier d'actionneur (3), seulement le premier élément de fixation (25) s'appuie sur le deuxième élément de fixation (35),
dans lequel au moins l'un des deux éléments de fixation (25, 35) a un contour de surface (27, 37) profilé orienté vers l'autre élément, et l'élément de fixation (25, 35) a une zone d'appui (26, 36) plane ou courbée à laquelle le contour de surface (27, 37) est formé, ledit élément d'actionnement (32) étant un arbre de sortie divisé en deux sections d'arbre (32a, 32b) par un accouplement.

2. Dispositif de fixation (1) selon la revendication 1, **caractérisé en ce que** le contour de surface (27, 37) est en forme ondulée.

3. Dispositif de fixation (1) selon l'une quelconque des revendications précédentes, **caractérisé en ce que** le contour de surface (27, 37) comprend au moins deux nervures (28, 38) en saillie.

4. Dispositif de fixation (1) selon l'une quelconque des revendications précédentes, **caractérisé en ce que** le contour de surface (27) du premier élément de fixation (25) est orienté transversalement par rapport au contour de surface (37) du deuxième élément de fixation (35).

5. Dispositif de fixation (1) selon l'une quelconque des revendications précédentes, **caractérisé en ce que** le contour de surface (27, 37) a une hauteur (H) correspondant à la moitié d'une longueur (L) du contour de surface (27, 37).

6. Dispositif de fixation (1) selon l'une quelconque des revendications précédentes, **caractérisé en ce que** le contour de surface (27, 37) a une hauteur (H) dans une zone de bord (26a, 36a) plus grande que dans une zone centrale (26b, 36b).

7. Dispositif de fixation (1) selon l'une quelconque des revendications précédentes, **caractérisé en ce que** le contour de surface (27, 37) est formé d'un seul tenant avec ledit élément de fixation (25, 35).

8. Dispositif de fixation (1) selon l'une quelconque des revendications précédentes, **caractérisé en ce que** le contour de surface (27, 37) est fabriqué d'un matériau à basse conductivité thermique.

9. Dispositif de fixation (1) selon l'une quelconque des revendications précédentes, **caractérisé en ce que** le contour de surface (27, 37) est traversé par au moins un alésage (29, 39) à travers lequel s'étend un rivet, une goupille ou une vis (4).
